# EUROPÄISCHE PATENTANMELDUNG

(11) **EP 2 163 791 A1**
(43) Veröffentlichungstag der Anmeldung: **17.03.2010**
(21) Anmeldenummer: 08164404.9
(22) Anmeldetag: 16.09.2008
(51) Int. Cl.: F16H 61/00

(54) **Mehrganggetriebe für ein Kraftfahrzeug**

(71) Anmelder: Valeo Sicherheitssysteme GmbH, 85253 Erdweg (DE)
(72) Erfinder: Orth, Dietmar, 85253 Erdweg (DE); Gauch, Winfried, 85253 Erdweg (DE); Schlentrich, Jorg, 85253 Erdweg (DE); Bellenbaum, Dietmar, 85253 Erdweg (DE); Laval, Anthony, 85253 Erdweg (DE); Grenouillat, Régis, 85253 Erdweg (DE); Zieglwalner, Thomas, 85253 Erdweg (DE)
(74) Vertreter: Jacquot, Ludovic R. G.

(57) **Zusammenfassung**

Die vorliegende Erfindung betrifft ein Mehrganggetriebe (15) für ein Kraftfahrzeug umfassend mindestens einen ersten Aktuator (21) zum Einlegen von einer ersten Gruppe von Gängen und einem zweiten Aktuator (23) zum Einlegen von einer zweiten Gruppe von Gängen, wobei die erste und zweite Gruppe von Gängen zueinander komplementär sind. Das Mehrganggetriebe (15) weist eine elektronische Steuerung (24) der ersten und zweiten Aktuatoren auf, die in einer Parksperrenposition beiden Aktuatoren so ansteuert, dass die beide Aktuatoren (21,23) jeweils einen Gang einlegen und somit das Getriebe sperren.

## Beschreibung

Die Erfindung bezieht sich auf ein Mehrganggetriebe für ein Kraftfahrzeug.

Zum Schutz vor Diebstählen und auch aus versicherungstechnischen Gründen sind Fahrzeuge mit mechanischen und elektronischen Wegfahrsperren ausgerüstet.

Diese sollen einen Dieb daran hindern, wenn er nicht die entsprechenden Zugangsberechtigungsmittel hat, mit dem Wagen wegzufahren und diesen zu stehlen.

Bezüglich der mechanischen Wegfahrsperren muss man vor allem die Lenkradsperren nennen, jedoch ist es auch üblich und erlaubt das Automatikgetriebe oder auch den Gangwahlhebel zu sperren.

Das Dokument DE102006022963 beschreibt eine solche Sperranordnung für ein Getriebe, insbesondere in Form einer Parksperrenanordnung für ein automatisiertes Getriebe.

Dabei wird einem bekannten Getriebe eine zusätzliche Sperranordnung hinzugefügt, die eine elektronisch ansteuerbare Blockiereinrichtung aufweist.

Im Einzelnen umfasst diese Blockiereinrichtung ein Parksperrenrad mit einer Außenverzahnung, welche drehfest mit der Ausgangswelle des Getriebes verbunden ist. Ein Sperrglied in Form einer Sperrklinke kann formschlüssig in die Außenverzahnung des Parksperrenrades eingreifen. Diese Sperrklinke kann durch einen Aktuator betätigt werden.

Nachteilig hat es sich erwiesen, dass diese Sperranordnung als selbstständiges Bauteil ausgeführt ist. Dadurch wird zusätzlicher Bauraum benötigt, der ohnehin in diesem Bereich eines Fahrzeugs Mangelware ist. Auch treibt eine solche selbstständige Anordnung die Kosten für diese Funktion in die Höhe und es bedarf einer separaten Qualitäts- und Sicherheitsprüfung dieses Bauteils, damit es z. B. nicht selbsttätig und unkontrolliert auslösen kann.

Automatisierte Getriebe (z. B. "AMT" Getriebe für "Automated Manual Transmission Control") erfreuen sich immer größerer Beliebtheit. Wohingegen in früheren Jahren rein mechanische Schaltgetriebe in Fahrzeugen benutzt wurden, sind nun mit AMT Schaltgetrieben oder DCT Schaltgetrieben (für "Double Clutch Transmission") so große Fortschritte gemacht worden, dass diese Getriebe nun dazu beitragen den Kraftstoffverbrauch eines Fahrzeugs zu reduzieren und zu optimieren.

Der Schaltvorgang eines AMT Schaltgetriebes ist vergleichbar mit dem eines manuell betätigten Getriebes. Jedoch weist das AMT Getriebe eine elektronisch gesteuerte Kupplung und Schaltgabeln auf, wobei die Kupplung und die Schaltgabeln über Aktuatoren oder Stellvorrichtungen bewegt werden. Diese Aktuatoren werden durch ein Kontrollgerät gesteuert.

Bei diesen Mehrganggetrieben werden ein erster Aktuator zum Einlegen von einer ersten Gruppe von Gängen und ein zweiter Aktuator zum Einlegen von einer zweiten Gruppe von Gängen, wobei die erste und zweite Gruppe von Gängen zueinander komplementär sind, benutzt. Zum Beispiel wird der erste Aktuator für die Gänge 1, 3 und 5 und der zweite Aktuator für die Gänge 2, 4 und 6 benutzt. Bei den bekannten Getrieben ist es ausgeschlossen, dass der erste und der zweite Aktuator gleichzeitig einen Gang einlegen.

Aufgabe der vorliegenden Erfindung ist es ein verbessertes Mehrganggetriebe mit einer Parksperrenfunktion vorzuschlagen.
Diese Aufgabe wird erfindungsgemäß gelöst durch Mehrganggetriebe für ein Kraftfahrzeug umfassend mindestens einen ersten Aktuator zum Einlegen von einer ersten Gruppe von Gängen und einem zweiten Aktuator zum Einlegen von einer zweiten Gruppen von Gängen, wobei die erste und zweite Gruppe von Gängen zueinander komplementär sind, **dadurch gekennzeichnet, dass** das Mehrganggetriebe eine elektronische Steuerung der ersten und zweiten Aktuatoren aufweist, die in einer Parksperrenposition beiden Aktuatoren so ansteuert, dass die beide Aktuatoren jeweils einen Gang einlegen und somit das Getriebe sperren.
Dieses Mehrganggetriebe kann weiterhin folgende Merkmale individuell oder in Kombination aufweisen.
- die Aktuatoren umfassen elektrisch gesteuerte Stellglieder,
- die Stellglieder sind Solenoide,
- das Mehrganggetriebe ist ein automatisiertes Schaltgetriebe (AMT) ist,
- das Mehrganggetriebe ist ein Doppelkupplungsgetriebe (DCT) ist,
- zwei eingelegte Gänge des Getriebes sind in der Lage mindestens 150% des nominalen Drehmomentes zu übertragen.

Die Erfindung betrifft ebenfalls ein Verfahren zum Betreiben eines Mehrganggetriebes wie oben beschrieben, **dadurch gekennzeichnet, dass** im Stillstand des Getriebes zwei Aktuatoren so betätigt werden, dass gleichzeitig zwei Gänge des Getriebes eingelegt werden und somit das Getriebe blockieren.
Weitere erfindungsmäßige Merkmale und Vorteile ergeben sich aus dem folgenden, anhand von einer Figur erläuterten Ausführungsbeispiel welches ein Schema eines Mehrganggetriebes zeigt.
Die Ausgangswelle 1 eines Motors 3 ist an eine erste Kupplung 5 gekoppelt. Die Ausgangswelle 7 der Kupplung 5 ist in Lagern 9 drehbar gehalten.
Die die Reifen antreibende Ausgangswelle 11 ist durch Lager 13 drehbar geführt.
Schematisch vereinfacht ist dargestellt ein Mehrganggetriebe 15 mit zum Beispiel einer ersten Stufe 17 für die ungeraden Gänge 1, 3, und 5 als erste Gruppe von Gängen und einer zweiten Stufe 19 für die geraden Gänge 2, 4 und 6 als zweite Gruppe von Gängen. Natürlich ist es auch möglich einen Aktuator für jeden Gang vorzusehen, so dass jede Gruppe nur einen einzelnen Gang umfasst. Das Mehrganggetriebe 15 ist zum Beispiel ein automatisiertes Schaltgetriebe (AMT) oder ein Doppelkupplungsgetriebe (DCT).
Jede Stufe 17 und 19 besitzt jeweils mindestens einen zugeordneten Aktuator 21 bzw. 23 der das Einkuppeln der jeweiligen Gänge steuert. Die Aktuatoren sind zum Beispiel als elektrische Stellglieder, als Solenoid, Elektromotor oder als pneumatisches oder hydraulisches Stellglied ausgeführt. Sie werden von einer elektronischen Steuerung 24 gesteuert.
Der Aktuator 21 wirkt zum Einlegen eines Ganges zum Beispiel auf eine Synchronisiereinrichtung 25 und der Aktuator 23 auf eine Synchronisiereinrichtung 27, welche jeweils ein Drehmoment von der Ausgangswelle 7 auf die Zahnräder 29 bzw. 31 übertragen können, und von dort dann über die angekoppelten Zahnräder 33 bzw. 35 auf die Ausgangswelle 11.
Die elektronische Steuerung ist in der Weise ausgelegt, dass sie in einer Parksperrenposition, die beiden Aktuatoren 21 und 23 so ansteuert, dass die beide Aktuatoren jeweils einen Gang einlegen und somit das Getriebe 15 sperren bzw. blockieren.
In einer Variante sind die Stufen des Mehrganggetriebes so ausgelegt, dass zwei eingelegte Gänge des Getriebes in der Lage sind mindestens 150% des nominalen Drehmomentes zu übertragen.

Durch eine solche Steuerung der Aktuatoren kann in einfacher Weise und ohne zusätzliche Teile eine sehr sichere Parksperrenfunktion erzielt werden.

In der Praxis wird die Parksperrenposition dann eingelegt, wenn der Fahrer das Fahrzeug verlässt. Dies wird zum Beispiel dadurch ermittelt, dass der Fahrberechtigungsgeber, wie zum Bespiel der Schlüssel oder andere Identifikationsmittel wie eine ID-card, aus dem Fahrgastraum entfernt wird und vom Fahrer ein Befehl gegeben wird, das Fahrzeug abzuschließen.

Erst in diesem Falle, und bei Erhalt eines gesonderten Befehls wird die elektronische Steuereinrichtung die Aktuatoren 21 und 23 so ansteuern, dass zwei Gänge gleichzeitig eingelegt werden können. Da beide Gänge unterschiedliche Übersetzungen haben, ist das Getriebe blockiert.

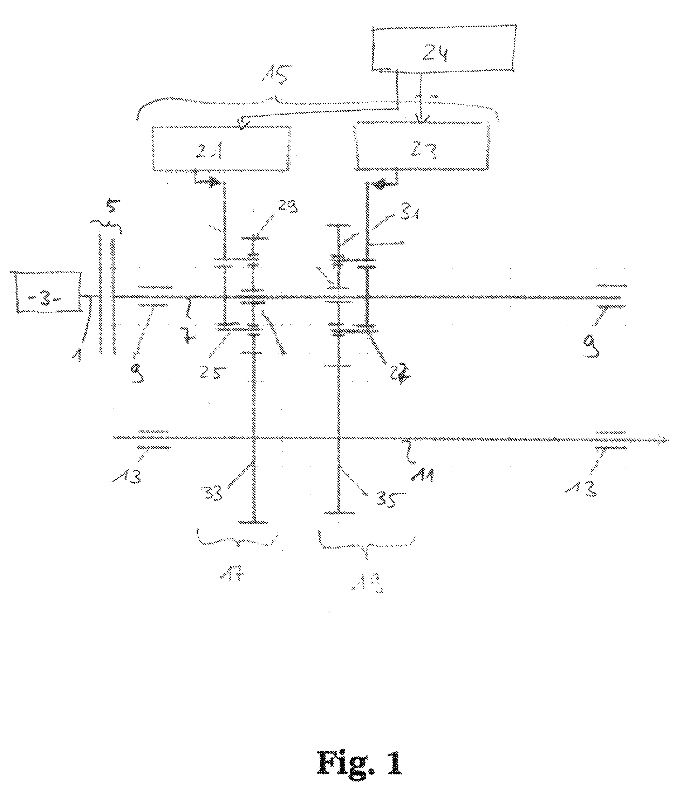

## Patentansprüche

1. Mehrganggetriebe (15) für ein Kraftfahrzeug umfassend mindestens einen ersten Aktuator (21) zum Einlegen von einer ersten Gruppe von Gängen und einem zweiten Aktuator (23) zum Einlegen von einer zweiten Gruppen von Gängen, wobei die erste und zweite Gruppe von Gängen zueinander komplementär sind, **dadurch gekennzeichnet, dass** das Mehrganggetriebe (15) eine elektronische Steuerung (24) der ersten und zweiten Aktuatoren aufweist, die in einer Parksperrenposition beiden Aktuatoren so ansteuert, dass die beide Aktuatoren (21,23) jeweils einen Gang einlegen und somit das Getriebe sperren.

2. Mehrganggetriebe nach Anspruch 1, **dadurch gekennzeichnet, dass** die Aktuatoren elektrisch gesteuerte Stellglieder umfassen.

3. Mehrganggetriebe nach Anspruch 2, **dadurch gekennzeichnet, dass** die Stellglieder Solenoide sind.

4. Mehrganggetriebe nach einem der Ansprüche 1 bis 3, **dadurch gekennzeichnet, dass** es ein automatisiertes Schaltgetriebe (AMT) ist.

5. Mehrganggetriebe nach einem der Ansprüche 1 bis 3, **dadurch gekennzeichnet, dass** es ein Doppelkupplungsgetriebe (DCT) ist.

6. Mehrganggetriebe nach einem der Ansprüche 1 bis 5, **dadurch gekennzeichnet, dass** zwei eingelegte Gänge des Getriebes in der Lage sind mindestens 150% des nominalen Drehmomentes zu übertragen.

7. Verfahren zum Betreiben eines Mehrganggetriebes nach einem der Ansprüche 1 bis 6, **dadurch gekennzeichnet, dass** im Stillstand des Getriebes zwei Aktuatoren so betätigt werden, dass gleichzeitig zwei Gänge des Getriebes eingelegt werden und somit das Getriebe (15) blockieren.
